# EUROPÄISCHE PATENTSCHRIFT

(11) **EP 2 059 833 B1**
(45) Veröffentlichungstag und Bekanntmachung des Hinweises auf die Patenterteilung: **19.06.2019**
(21) Anmeldenummer: 07802581.4
(22) Anmeldetag: 13.08.2007
(51) Int. Cl.: G01S 17/08, G01S 17/02, G01S 7/481, G01C 3/02, G01S 7/51

(54) **ENTFERNUNGSMESSGERÄT**
DISTANCE MEASURING DEVICE
APPAREIL DE MESURE À DISTANCE

(30) Priorität: 01.09.2006 DE 10604107
(43) Veröffentlichungstag der Anmeldung: 20.05.2009
(73) Patentinhaber: Robert Bosch GmbH, 70442 Stuttgart (DE)
(72) Erfinder: SKULTETY-BETZ, Uwe, 70771 Leinfelden-Echterdingen (DE)
(86) Internationale Anmeldenummer: PCT/EP2007/058343
(87) Internationale Veröffentlichungsnummer: WO 2008/025665

(56) Entgegenhaltungen:
- WO-A-99/06987
- WO-A-02/075517
- WO-A-2005/088247
- WO-A1-03/031910
- FR-A- 2 722 285
- US-A1- 2002 080 257
- US-A1- 2004 249 899
- US-A1- 2005 140 677

## Beschreibung

### Stand der Technik

Die Erfindung geht aus von einem Entfernungsmessgerät nach dem Oberbegriff des Anspruchs 1.

Ein Entfernungsmessgerät zum Vermessen von Strecken ist bekannt. Zur Eingabe einer Information durch einen Bediener ist dieses mit einer Eingabeeinheit versehen, die als Bedientastatur ausgebildet ist.

Die WO 2005/088247 A1 offenbart einen handgehaltenen Entfernungsmesser, wie beispielsweise einen Laserentfernungsmesser, nebst Neigungsmesser, mit Eingabetasten zur Aktivierung einer Messung, und einem Display zur Anzeige von Messwerten. Darüber hinaus offenbart die WO 2005/088247 A1 ein sogenanntes "*head-up-display*" (HUD), welches mit dem Gehäuse des Gerätes verbunden ist und in das die Messwerte der Geräteanzeige eingespiegelt werden können. Auf diese Weise ist es einem Anwender möglich, ein Ziel anzuvisieren und gleichzeitig eventuell Messwerte abzulesen, ohne seine Blickrichtung ändern zu müssen, was typischerweise zu einem Verwackeln des Gerätes bzw. des Ziels führen würde.

Aus der WO 03/031910 A1 ist ein als "Docking-Station" ausgebildeter Entfernungsmesser bekannt, in den ein PDA-Computer (Personal Digital Assistent) eingesetzt werden kann. Der PDA-Computer der WO 03/031910 A1 besitzt eine Rechen- und Steuereinheit zu Steuerung des Entfernungsmessers sowie ein "Touch Display", auf dem auch die Messwerte der Entfernungsmessung angezeigt werden können.

### Vorteile der Erfindung

Die Erfindung geht aus von einem Entfernungsmessgerät mit einer Bedienschnittstelle.

Es wird vorgeschlagen, dass die Bedienschnittstelle zumindest eine berührungsempfindliche Eingabeeinheit aufweist. Es können dadurch ein besonders hoher Bedienkomfort und eine hohe Flexibilität in der Anwendung des Entfernungsmessgeräts erreicht werden. Unter einer "berührungsempfindlichen" Eingabeeinheit soll in diesem Zusammenhang insbesondere eine Eingabeeinheit, die zur weitestgehend drucklosen Eingabe vorgesehen ist, verstanden werden. Dabei kann die Eingabeeinheit mit einem Berührungsdetektor versehen sein, welcher z.B. mittels eines kapazitiven Sensierens eine Berührung, insbesondere eine drucklose Berührung einer Oberfläche der Eingabeeinheit, detektieren kann. Alternativ oder zusätzlich kann die Berührungsempfindlichkeit der Eingabeeinheit durch eine widerstandsgesteuerte Erfassung erreicht werden. Dabei weist die Eingabeeinheit vorzugsweise zumindest zwei leitfähige Schichten auf, die bei einer Berührung einer Oberfläche der Eingabeeinheit mit einem leichten Druck in Kontakt zueinander kommen, wobei die Berührung mittels des Widerstands dieses Kontakts erfasst werden kann. Eine auf dem Prinzip einer Lichtschranke basierende Erfassung einer Berührung, insbesondere einer drucklosen Berührung, z.B. mittels Infrarotstrahlungsquellen, ist ebenfalls denkbar. In einer weiteren Ausführung kann die Eingabeeinheit ferner zum Detektieren der Berührung durch eine Schallwellen gesteuerte Erfassung, die z.B. durch den Einsatz von piezoelektrischen Elementen erreicht werden kann, vorgesehen sein.

Es kann außerdem die Anzahl von Elementen für die Bedienschnittstelle, welche relativ zum Gehäuse des Entfernungsmessgeräts beweglich gelagert sind, wie z.B. Tasten, vorteilhaft reduziert werden. Insbesondere kann auf den Einsatz von beweglichen Elementen verzichtet werden. Dadurch kann eine besonders effektive Abschirmung eines Innenraums des Gehäuses gegen ein Eindringen von Schmutz und/oder einer Flüssigkeit über eine Lagerstelle eines beweglichen Elements erreicht werden. Des Weiteren kann eine konstruktiv aufwendige Kontaktierung eines Satzes von beweglichen Elementen vermieden werden, wodurch Bauraum im Innenraum des Gehäuses eingespart werden kann. Ferner kann eine flexible Ausgestaltung dieses Innenraums erreicht werden, insbesondere im Hinblick auf die Anordnung einer Leiterplatte.

Das Entfernungsmessgerät kann mit einer Anzeigeeinheit versehen sein, wobei die berührungsempfindliche Eingabeeinheit von der Anzeigeeinheit getrennt ausgeführt ist. Beispielsweise kann die Eingabeeinheit als Touchpad (oder integriertes Berührungsfeld) oder als Trackpoint (oder integrierter Bedienstift) ausgebildet sein, und in Kombination mit der Anzeigeeinheit zum Bedienen des Entfernungsmessgeräts eingesetzt werden.

Eine kompakte Ausgestaltung des Entfernungsmessgeräts kann besonders vorteilhaft erreicht werden, wenn die berührungsempfindliche Eingabeeinheit einen Berührungsbereich aufweist, welcher von einer Anzeigeeinheit zur Anzeige einer Information ausgebildet ist. Beispielsweise kann die Eingabeeinheit von einem Touchscreen (oder Tastschirm) ausgebildet sein.

Ferner wird vorgeschlagen, dass die Bedienschnittstelle an einer Bedienseite angeordnet ist und der Berührungsbereich sich über zumindest einen wesentlichen Teil der Bedienseite erstreckt. Dadurch kann ein besonders hoher Lese- und Bedienkomfort der Bedienschnittstelle erreicht werden. Die Bedienseite ist vorzugsweise von einer Gehäuseseite des Entfernungsmessgeräts gebildet. Unter einem "wesentlichen" Teil der Bedienseite kann in diesem Zusammenhang insbesondere zumindest 40 %, vorteilhaft zumindest 50 % und besonders bevorzugt zumindest 70 % der Bedienseite, verstanden werden.

Es wird außerdem vorgeschlagen, dass das Entfernungsmessgerät eine Steuereinheit aufweist, welche im Zusammenwirken mit der berührungsempfindlichen Eingabeeinheit zur Verarbeitung von Streckeninformationen durch einen Bediener vorgesehen ist, wodurch eine hohe Flexibilität in der Anwendung des Entfernungsmessgeräts erreicht werden kann. Unter "Streckeninformationen" können jegliche Informationen, die Eigenschaften von Strecken betreffen, verstanden werden. Beispielsweise können unter Streckeninformationen Messergebnisse einer Streckenmessung, eine Zuordnung einer bestimmten Strecke zu einem zu vermessenden oder vermessenen Raum, eine Zuordnung einer Strecke zu einem Bereich eines zu vermessenden Raums, wie z.B. die Zuordnung einer Strecke zu einer bestimmten Wand, usw. verstanden werden. Unter einer Verarbeitung können in diesem Zusammenhang z.B. eine Zuordnung, eine Auswertung usw. verstanden werden.

Eine besonders übersichtliche Zuordnung von den Streckeninformationen kann einfach und komfortabel erreicht werden, wenn die Steuereinheit zur Herstellung einer Tabelle zum Zuordnen der Streckeninformationen durch den Bediener mittels der Eingabeeinheit vorgesehen ist.

Es wird ferner vorgeschlagen, dass das Entfernungsmessgerät eine Anzeigeeinheit und eine Steuereinheit aufweist, die im Zusammenwirken mit der berührungsempfindlichen Eingabeeinheit dazu vorgesehen ist, einem Anzeigefeld zur Anzeige einer Streckeninformation einer Strecke eine Steuerfunktion zum Steuern einer Messung der Strecke zuzuordnen. Es kann dadurch ein besonders einfaches Bedienen des Entfernungsmessgeräts erreicht werden. Insbesondere kann eine aufwendige Navigation in einem Menü vermieden werden. Das Anzeigefeld kann insbesondere ein Bereich einer Anzeigeeinheit des Entfernungsmessgeräts sein, dessen Dimension zur Anzeige einer Kenngröße, insbesondere einer Zahl und ggf. einer Einheit, abgestimmt ist. Das Anzeigefeld kann beispielsweise ein Tabellenfeld einer Tabelle zur Zuordnung von Streckeninformationen sein, wodurch besonders schnell und einfach eine übersichtliche Zuordnung von Streckeninformationen im Laufe einer Raumvermessung erzielt werden kann. Unter einer Steuerung der Messung kann z.B. ein Starten, ein Stoppen oder ein Wiederholen einer Messung verstanden werden.

In einer vorteilhaften Weiterbildung der Erfindung wird vorgeschlagen, dass das Entfernungsmessgerät eine Steuereinheit umfasst, welche einen Zeichenmodus aufweist, der zur Gestaltung einer Zeichnung mittels der berührungsempfindlichen Eingabeeinheit vorgesehen ist. Dadurch können ein hoher Komfort und eine hohe Flexibilität in der Anwendung des Entfernungsmessgeräts erreicht werden.

In diesem Zusammenhand kann eine besonders einfache und intuitive Herstellung der Zeichnung erreicht werden, wenn die Steuereinheit dazu vorgesehen ist, die Zeichnung anhand eines Skizzierens durch einen Bediener mittels der berührungsempfindlichen Eingabeeinheit herzustellen.

Eine besonders komfortable Bedienung kann erreicht werden, wenn das Entfernungsmessgerät einen Bedienstift zum Bedienen der Eingabeeinheit aufweist.

Es wird ferner vorgeschlagen, dass das Entfernungsmessgerät eine Bedientaste aufweist, die zu einem Bedienen im Zusammenwirken mit der berührungsempfindlichen Eingabeeinheit vorgesehen ist. Dadurch können eine besonders einfache Bedienung des Entfernungsmessgeräts und eine vorteilhafte Komplementarität mit der berührungsempfindlichen Eingabeeinheit erreicht werden, insbesondere wenn das Entfernungsmessgerät in einer eine Bedienung der berührungsempfindlichen Eingabeeinheit erschwerenden Position gehalten wird.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Entfernungsmessgerät mit einem Touchscreen und einem Bedienstift,
- Fig. 2: eine schematische Darstellung des Touchscreens aus Figur 1, auf welchem eine Zeichnung mittels des Bedienstifts skizziert wird,
- Fig. 3: eine schematische Darstellung eines Zeichenmodus, in welchem eine Handskizze verarbeitet wird,
- Fig. 4: einen Zeichenmodus, in welchem ein Anzeigefeld mittels des Bedienstifts bewegt wird,
- Fig. 5: einen Zeichenmodus, in welchem eine Zeichnung an Messergebnisse angepasst wird,
- Fig. 6: einen Zeichenmodus, in welchem durch Betätigen eines Symbols ein Messvorgang gestartet wird,
- Fig. 7: einen Zeichenmodus, in welchem eine Zeichnung anhand von externen Daten hergestellt wird,
- Fig. 8: einen Bearbeitungsmodus, in welchem eine Tabelle mit Streckeninformationen hergestellt wird,
- Fig. 9: das Anschließen einer Druckeinheit an das Entfernungsmessgerät und
- Fig. 10: eine alternative Ausführungsform des Entfernungsmessgeräts mit einem Touchscreen und einem Bedienelement.

### Beschreibung der Ausführungsbeispiele

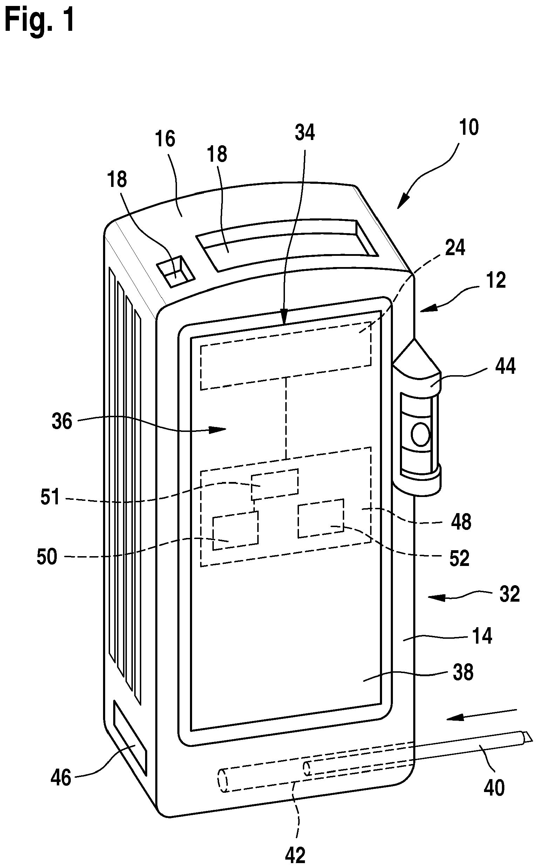

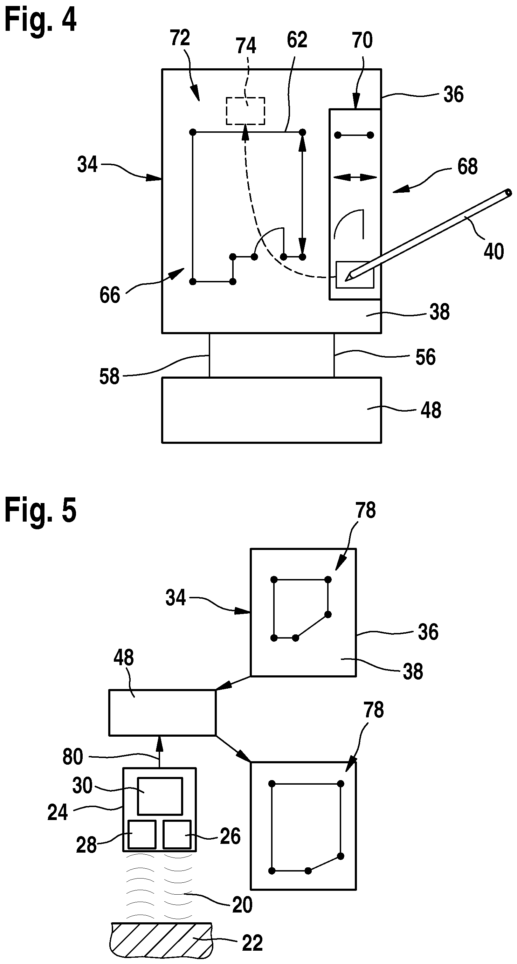

Figur 1 zeigt ein Entfernungsmessgerät 10 in einer perspektivischen Ansicht. Das Entfernungsmessgerät 10 weist ein Gehäuse 12 auf, das eine Bedienseite 14 und eine an die Bedienseite 14 angrenzende Signalseite 16 bildet. Die Signalseite 16 weist optische Bauelemente 18, über welche ein optisches Messsignal 20, insbesondere ein Lasersignal, gesendet bzw. empfangen wird (siehe Figur 5). Mittels des Messsignals 20 kann eine Entfernung des Entfernungsmessgeräts 12 zu einem zu vermessenden Objekt 22 ermittelt werden. Zum Erzeugen, Empfangen und Verarbeiten des Messsignals 20 ist das Entfernungsmessgerät 10 mit einer Messeinheit 24 versehen, welche eine Sendeeinheit 26, eine Empfangseinheit 28 und eine Auswerteeinheit 30 zum Auswerten des empfangenen Messsignals 20 aufweist (siehe Figur 5).

Die Bedienseite 14 weist eine Bedienschnittstelle 32 auf, die zur Kommunikation mit einem Bediener vorgesehen ist. Die Bedienschnittstelle 32 umfasst eine als Bildschirm ausgebildete Anzeigeeinheit 34, die zur Anzeige von Informationen vorgesehen ist. Die Anzeigeeinheit 34 ist als Touchscreen (oder Tastschirm) ausgeführt und bildet eine berührungsempfindliche Eingabeeinheit 36. Hierzu weist die Anzeigeeinheit 34 eine transparente Schirmschicht auf, deren Oberfläche einen Berührungsbereich 38 der Eingabeeinheit 36 bildet, welcher zur Eingabe von Informationen durch dessen Berührung vorgesehen ist. Die Eingabeeinheit 36 ist in diesem Beispiel zum Detektieren einer Berührung mittels einer widerstandsgesteuerten Erfassung vorgesehen. Hierzu weist die Eingabeeinheit eine weitere transparente Schirmschicht (in der Figur nicht dargestellt) auf, die mit einem Abstand zur oberen, den Berührungsbereich bildenden Schirmschicht unterhalb dieser oberen Schirmschicht angeordnet ist. Die Schirmschichten sind leitfähig und als ITO-Schichten (oder Indiumzinnoxidschichten) ausgebildet. Durch eine Berührung der oberen Schirmschicht kommen die Schirmschichten in elektrischen Kontakt zueinander. Durch den Widerstand dieses Kontakts entsteht an der Berührungsstelle eine elektrische Spannung, welche mittels nicht gezeigter Sensoren erfasst werden kann. Die erfasste Spannungsänderung kann zur Bestimmung der Koordinaten der Berührungsstelle benutzt werden. Der Berührungsbereich 38 bildet eine zu einer Eingabe zur Verfügung stehende Berührungsfläche, die sich vorteilhaft über einen wesentlichen Teil der Bedienseite 14, und zwar über ca. 70 % der Bedienseite 14, erstreckt.

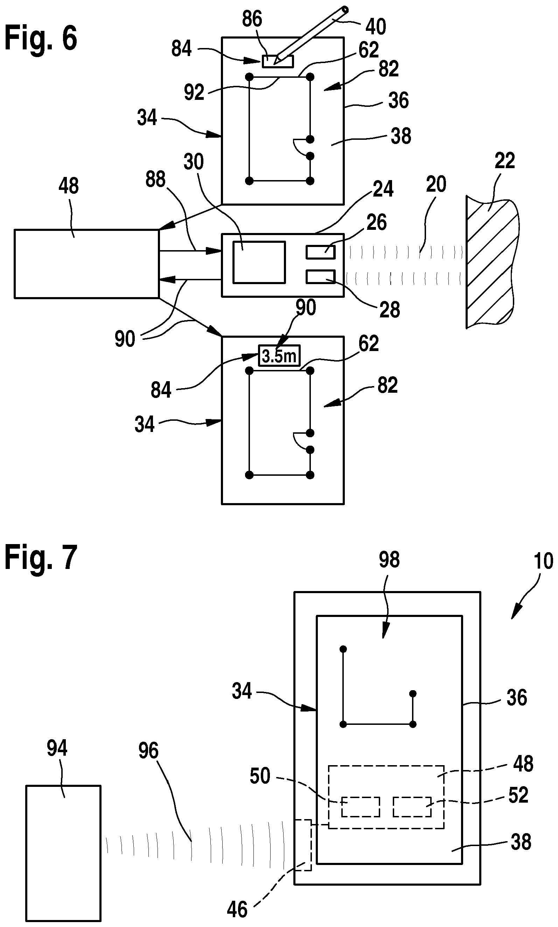

Zum Bedienen der Eingabeeinheit 36 ist das Entfernungsmessgerät 10 mit einem Bedienstift 40 versehen. Im Gehäuse 12 ist ein Aufnahmebereich 42 zur Aufnahme des Bedienstifts 40 ausgespart. Dadurch kann ein Lösen des Bedienstifts 40 vom Gehäuse 12 bei einem Transport des Entfernungsmessgeräts 10 vermieden werden. In einer Ausführungsvariante ist denkbar, dass ein Befestigungsmittel zum Befestigen des Bedienstifts 40 an die Oberfläche des Gehäuses 12 angeformt ist. Am Gehäuse 12 ist ferner eine Libelle 44 fixiert. Außerdem weist das Entfernungsmessgerät 10 eine als Bluetooth-Schnittstelle ausgebildete Datenschnittstelle 46 auf, die zur Herstellung einer Datenverbindung mit einer externen Dateneinheit (siehe z.B. Figur 7) vorgesehen ist.

Zur Durchführung von Betriebsmodi des Entfernungsmessgeräts 10 ist dieses mit einer Steuereinheit 48 versehen. Die Steuereinheit 48 umfasst eine erste Speichereinheit 50, in welcher Programme zur Durchführung der Betriebsmodi des Entfernungsmessgeräts 10 gespeichert sind. Die Steuerung der Betriebsmodi im Zusammenwirken mit der Speichereinheit 50 erfolgt mittels einer als Prozessor oder als Mikrokontroller ausgebildeten Recheneinheit 51. In der Steuereinheit 48 ist außerdem eine zweite Speichereinheit 52 angeordnet, deren Funktion weiter unten beschrieben wird.

Die Steuereinheit 48 ist insbesondere mit Betriebsmodi versehen, die jeweils als Zeichenmodi zur Gestaltung einer Zeichnung vorgesehen sind. Diese Zeichenmodi werden anhand der nachfolgenden Figuren erläutert.

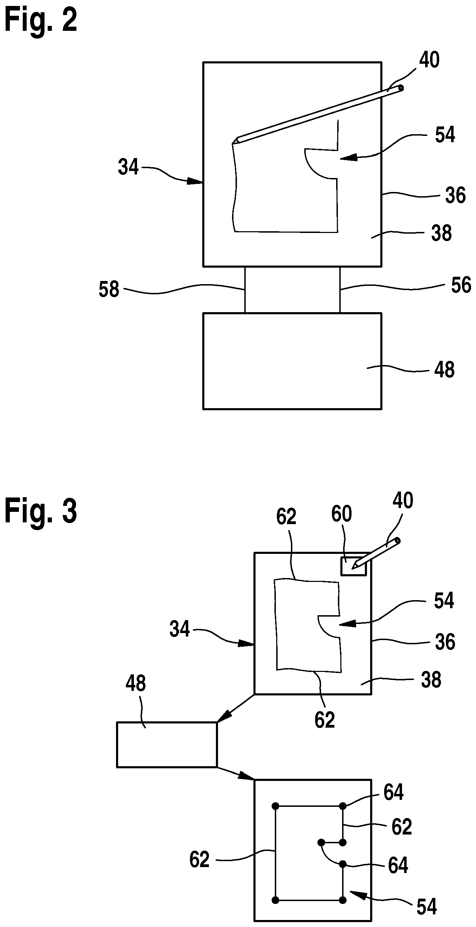

In Figur 2 sind die Eingabeeinheit 36 und die Steuereinheit 48 in einer schematischen Ansicht dargestellt. Es wird angenommen, dass ein Bediener die Vermessung eines Raums mittels des Entfernungsmessgeräts 10 vornimmt. Im Vorfeld der Vermessung kann der Bediener mittels der Eingabeeinheit 36 eine Zeichnung 54 unter der Form einer Handskizze des zu vermessenden Raums herstellen. Hierzu schaltet der Bediener einen Zeichenmodus der Steuereinheit 48 ein, in welchem er zu einem Skizzieren die Spitze des Bedienstifts 40 auf dem Berührungsbereich 38 der Eingabeeinheit 36 bewegen kann. Dabei nimmt die Steuereinheit 48 im Zusammenwirken mit den (in den Figuren nicht gezeigten) Sensoren der Eingabeeinheit 36 Positionsinformationen 56 der sukzessiven Positionen des Bedienstifts 40 auf dem Berührungsbereich 38 auf. Anhand dieser Positionsinformationen 56 stellt die Steuereinheit 48 die Zeichnung 54 her, welche mittels der Anzeigeeinheit 34 angezeigt wird. Dabei werden anhand der Positionsinformationen 56 Steuersignale 58 zur Steuerung der Anzeigeeinheit 34 durch die Steuereinheit 48 ermittelt.

Die hergestellte Handskizze kann ferner im Zeichenmodus durch die Steuereinheit 48 verarbeitet werden. Ein Verarbeitungsvorgang durch die Steuereinheit 48 ist anhand von Figur 3 erläutert. Der Verarbeitungsvorgang wird durch ein Markieren und/oder ein Betätigen eines durch die Anzeigeeinheit 34 angezeigten Bedienfelds 60 mittels des Bedienstifts 40 oder eines Fingers gestartet. Die Steuereinheit 48 ist mit einer Erkennungsfunktion versehen, mittels welcher einzelne Strecken 62, aus denen die Zeichnung 54 besteht, erkannt werden können. Diese Strecken 62 können außerdem durch eine Eingabe des Bedieners, indem dieser Eckpunkte 64 der Zeichnung 54 mit dem Bedienstift 40 markiert, festgelegt werden. Sind die einzelnen Strecken 62 festgelegt, finden ein Glättungsvorgang und/oder eine Ausrichtung der Strecken 62 statt. Wahlweise kann der Bediener Einfluss auf die Streckenbearbeitung haben, indem er vorgeschlagene Lösungen annimmt oder ablehnt und/oder indem er die Ausrichtung und/oder die Länge einer zu bearbeitenden Strecke 62 festlegt.

Ein weiterer Zeichenmodus der Steuereinheit 48 ist in Figur 4 schematisch dargestellt. In diesem Modus kann der Bediener eine Zeichnung 66 mittels vorgegebener Symbole 68 herstellen. Diese werden in einer Symbolleiste 70 angezeigt, welche seitlich eines Zeichenfelds 72 angezeigt ist. Zur Herstellung der Zeichnung 66 kann ein Symbol 68 mittels des Bedienstifts 40 in der Symbolleiste 70 markiert und in das Zeichenfeld 72 in eine erwünschte Position bewegt werden.

Einer durch die Zeichnung festgelegten Strecke 62 kann ferner ein Anzeigefeld 74 zur Anzeige einer Streckeninformation zugeordnet werden. Hierzu kann der Bediener ein das Anzeigefeld 74 darstellendes Symbol 68 markieren und durch eine in der Figur gestrichelt dargestellte Bewegung in eine erwünschte Position innerhalb des Zeichenfelds 72 platzieren. Das Anzeigefeld 74 im Zeichenfeld 72 stellt einen Bereich der Anzeigeeinheit 34 dar, der in diesem Beispiel zur Anzeige der Länge der zugeordneten Strecke 62 nach deren Vermessung vorgesehen ist. Alternativ oder zusätzlich kann eine zu einer Zuordnung der Strecke 62 vorgesehene Bezeichnung angezeigt werden.

Anhand von Figur 5 wird ein weiterer Zeichenmodus der Steuereinheit 48 erläutert. Es wird angenommen, dass ein Bediener eine Zeichnung 78 eines zu vermessenden Raums, z.B. mittels eines der oben beschriebenen Zeichenmodi, hergestellt hat. Anschließend führt der Bediener eine Vermessung des Raums mittels eines Messungsmodus der Messeinheit 24 durch. Die Steuereinheit 48 ist anhand der durch die Messeinheit 24 erfassten Messergebnisse 80 dazu vorgesehen, die im Vorfeld der Vermessung hergestellte Zeichnung an die Messergebnisse 80 anzupassen, wodurch eine maßstabgetreue Abbildung des vermessenen Raums durch die Steuereinheit 48 gestaltet wird.

Die Steuereinheit 48 ist mit einem weiteren Betriebsmodus versehen, der anhand von Figur 6 erläutert wird. Es wird angenommen, dass der Bediener, z.B. mittels des in Figur 4 gezeigten Zeichenmodus, eine Zeichnung 82 eines zu vermessenden Raums hergestellt hat, wobei einer bestimmten Strecke 62 der Zeichnung 82 ein Anzeigefeld 84 zur Anzeige eines Messergebnisses zugeordnet worden ist. Ferner wird angenommen, dass der Bediener die Strecke 62 vermessen will. Im hier beschriebenen Betriebsmodus der Steuereinheit 48 kann der Bediener das das Anzeigefeld 84 darstellende Symbol 86 mittels des Bedienstifts 40 markieren und betätigen. Dies aktiviert eine Steuerfunktion der Steuereinheit 48, die ein Steuersignal 88 zum Starten eines Messvorgangs der Messeinheit 24 an die Messeinheit 24 übermittelt, welche mittels des Messsignals 20 ein Messergebnis 90 ermittelt. Nach Vermessung wird durch die Steuereinheit 48 in Verbindung mit der Anzeigeeinheit 34 das Messergebnis 90 in einer Längeneinheit im entsprechenden Anzeigefeld 84 angezeigt. In einer Ausführungsvariante des Betriebsmodus kann der Bediener ein als Linie ausgebildetes Symbol 92, welches die Strecke 62 darstellt, direkt markieren und betätigen, wodurch der Messvorgang der gewählten Strecke 62 gestartet wird. Außerdem ist denkbar, dass der Bediener z.B. durch ein Blinken des Symbols 86 und/oder des Symbols 92 zum Starten des Messvorgangs aufgefordert wird.

In Figur 7 ist ein weiterer Zeichenmodus der Steuereinheit 48 dargestellt. In diesem Zeichenmodus wird eine Datenverbindung mit einer externen Dateneinheit 94, wie z.B. einem PDA (Personal Digital Assistant oder persönlicher digitaler Assistent) oder einem Notebook, hergestellt. Anhand von Daten 96, die über die Datenschnittstelle 46 gelesen sind, wird durch die Steuereinheit 48 im Zusammenwirken mit der Anzeigeeinheit 34 eine den Daten entsprechende Zeichnung 98 angezeigt. Alternativ oder zusätzlich zur Anzeige können die importierten Daten in der Speichereinheit 52 gespeichert werden, wo sie für eine spätere Verarbeitung zur Verfügung stehen. Beispielsweise kann über die Datenschnittstelle 46 eine mittels einer externen Einheit hergestellte Zeichnung oder eine Zeichenvorlage importiert werden. In der Speichereinheit 52 können außerdem Zeichnungen gespeichert werden, die vom Bediener mittels der Eingabeeinheit 36 hergestellt sind. In einer weiteren Ausführungsvariante des Entfernungsmessgeräts 10 ist denkbar, dass die Datenschnittstelle 46 als Scanneinheit ausgebildet ist, über welche eine Zeichnung, wie z.B. eine Handskizze, eingescannt werden kann.

In einem weiteren Betriebsmodus der Steuereinheit 48 kann über die Datenschnittstelle 46 ferner ein Programm zur Durchführung der Betriebsmodi, insbesondere der Zeichenmodi der Steuereinheit 48, heruntergeladen werden. Dabei wird eine Datenverbindung zwischen der Datenschnittstelle 46 und der Speichereinheit 50 hergestellt. Hiermit kann der Bediener vorhandene Programme aktualisieren und/oder die Steuereinheit 48 mit erweiterten Betriebsmodi, insbesondere Zeichenmodi, versehen.

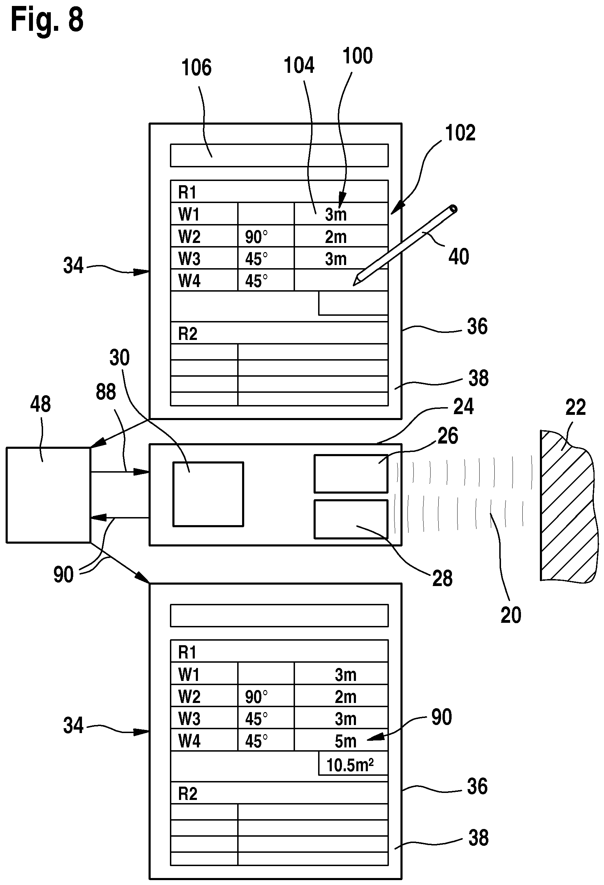

In Figur 8 ist ein weiterer Betriebsmodus der Steuereinheit 48 dargestellt, in welchem Streckeninformationen 100 mittels der Eingabeeinheit 36 verarbeitet werden können. In diesem Betriebsmodus kann insbesondere eine Tabelle 102 hergestellt werden. In dieser Tabelle 102 können Streckeninformationen 100 von zu vermessenden oder vermessenen Räumen eingetragen bzw. ausgewertet werden. Es können Untertabellen R1, R2 usw. hergestellt werden, die jeweils einem Raum zugeordnet sind. Dabei können in Anzeigefeldern 104 der Untertabellen R1, R2 Streckeninformationen 100, und zwar die Bezeichnung einer Strecke, welche z.B. jeweils einer Wand W1, W2 usw. entspricht, die erfasste Länge der Strecke, ein von zwei aneinander angrenzenden Strecken gebildeter Winkel usw. eingetragen werden. Die Bedienung erfolgt mittels des Bedienstifts 40 und über eine Symbol- und/oder Menüleiste 106, die oberhalb der Tabelle 102 angezeigt ist.

Im Betriebsmodus wird ferner dem Anzeigefeld 104 der Tabelle 102 eine Steuerfunktion zum Steuern eines Messvorgangs der Messeinheit 24 zugeordnet. Durch Markieren und/oder Betätigen eines Anzeigefelds 104, welches einer zu vermessenden Strecke, in diesem Beispiel der Strecke W4 entspricht, kann eine Vermessung der Strecke durch die Messeinheit 24 gestartet werden. Dies erfolgt im Zusammenwirken mit der Steuereinheit 48 analog zum Vorgang, welcher anhand von Figur 6 erläutert ist. Nach Vermessung der Strecke wird anhand des Messergebnisses 90 die Länge der Strecke im Anzeigefeld 104 angezeigt. Die Tabelle 102 weist außerdem eine Rechenfunktion auf, die anhand von Streckenlängen und ggf. Winkelwerten eine Fläche oder ein Volumen des entsprechenden Raums automatisch ermittelt.

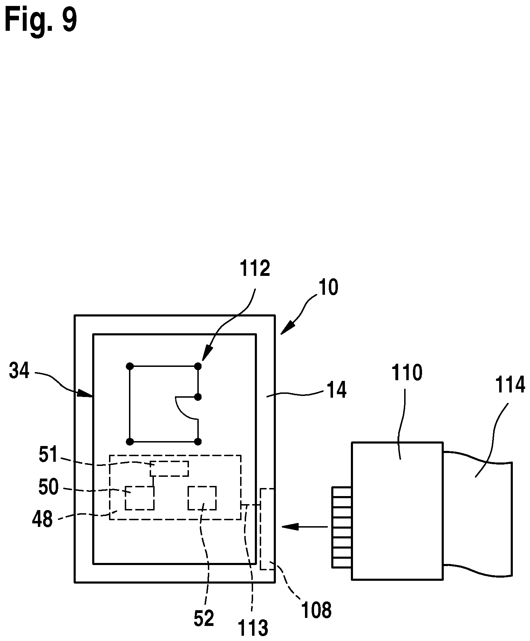

Figur 9 zeigt das Entfernungsmessgerät 10 in einer weiteren Ausführungsform. Hierbei weist das Entfernungsmessgerät 10 eine Datenschnittstelle 108 auf, die zur Herstellung einer Datenverbindung mit einer externen Druckeinheit 110 vorgesehen ist. Diese Druckeinheit 110, welche als Thermodrucker ausgebildet ist, kann über diese Datenschnittstelle 108, die als Adaptereinheit mit einer Befestigungsschnittstelle ausgeführt ist, an dem Gehäuse 12 fixiert werden. Hierzu wird der Grundkörper der Druckeinheit 110 an das Gehäuse 12 angebracht. Es wird in einem Druckmodus der Steuereinheit 48 eine Datenverbindung zwischen der Steuereinheit 48 und einer Steuereinheit der Druckeinheit 110 hergestellt, wobei Druckdaten 113 durch die Steuereinheit 48 an die Druckeinheit 110 übermittelt werden. Mittels der Druckeinheit 110 kann eine vom Bediener hergestellte Zeichnung 112, welche in der Speichereinheit 52 gespeichert und/oder mittels der Anzeigeeinheit 34 angezeigt ist, zur Ausarbeitung eines einen Raum betreffenden Dokuments, wie z.B. eines Protokolls, auf ein Medium 114 gedruckt werden.

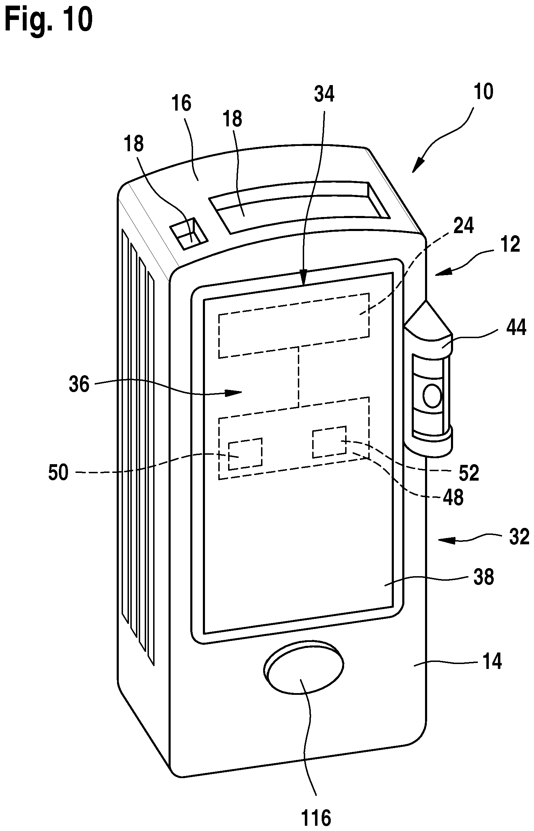

Figur 10 zeigt eine alternative Ausführungsform des Entfernungsmessgeräts 10. Dabei werden für Bauteile, die dem vorhergehenden Ausführungsbeispiel entsprechen, keine neuen Bezugszeichen vergeben. Die Bedienschnittstelle 32 weist zusätzlich zur berührungsempfindlichen Eingabeeinheit 36 ein als Bedientaste ausgebildetes Bedienelement 116 auf. Diesem Bedienelement 116 wird insbesondere eine Steuerfunktion der Steuereinheit 48 zum Steuern eines Messvorgangs der Messeinheit 24 zugeordnet. Ist z.B. das Gehäuse 12 in einer Position gehalten, die das Bedienen der Eingabeeinheit 36 mittels des Bedienstifts 40 oder eines Fingers erschwert, kann vorteilhaft beispielsweise ein Starten eines Messvorgangs, insbesondere in einem in Figur 6 oder 8 beschriebenen Betriebsmodus der Steuereinheit 48, durch ein Betätigen des Bedienelements 116 einfach erreicht werden.

## Patentansprüche

1. Entfernungsmessgerät mit einem Gehäuse (12), welches eine Bedienseite (14) und eine an die Bedienseite (14) angrenzende Signalseite (16) bildet, wobei die Signalseite (16) optische Bauelemente (18) aufweist, über welche ein optisches Messsignal (20), insbesondere ein Lasersignal, gesendet bzw. empfangen werden kann, wobei mittels des Messsignals (20) eine Entfernung des Entfernungsmessgerätes (12) zu einem zu vermessenden Objekt (22) ermittelt werden kann, die Bedienseite (14) eine Bedienschnittstelle (32) aufweist, die zur Kommunikation mit einem Bediener vorgesehen ist, wobei die Bedienschnittstelle (32) zumindest eine berührungsempfindliche Eingabeeinheit (36) aufweist, wobei die berührungsempfindliche Eingabeeinheit (36) einen Berührungsbereich (38) aufweist, welcher von einer Anzeigeeinheit (34) zur Anzeige einer Entfernungsinformation des Entfernungsmessgerätes (12) zu einem zu vermessenden Objekt (22) gebildet ist, **gekennzeichnet durch** eine Steuereinheit (48) und einen Zeichenmodus der Steuereinheit (48), der zur Gestaltung einer Zeichnung (54, 66, 78, 82, 98, 112) mittels der berührungsempfindlichen Eingabeeinheit (36) vorgesehen ist, wobei im Vorfeld einer Vermessung durch den Bediener mittels der Eingabeeinheit (36) eine Zeichnung (54) in Form einer Handskizze des zu vermessenden Raums herstellbar ist, wobei die Steuereinheit (48) ferner dazu vorgesehen ist, anhand von erfassten Messergebnissen (80) die im Vorfeld der Vermessung hergestellte Zeichnung (54) an die Messergebnisse (80) anzupassen, wodurch eine maßstabgetreue Abbildung des vermessenen Raums durch die Steuereinheit (48) gestaltbar ist.

2. Entfernungsmessgerät nach Anspruch 1, **dadurch gekennzeichnet, dass** der Berührungsbereich (38) sich über zumindest 40 %, vorteilhaft zumindest 50 % und besonders bevorzugt zumindest 70 % der Bedienseite (14) erstreckt.

3. Entfernungsmessgerät nach Anspruch 1 oder 2, **dadurch gekennzeichnet, dass** der Berührungsbereich (38) sich über zumindest einen wesentlichen Teil der Bedienseite (14) erstreckt.

4. Entfernungsmessgerät nach einem der vorhergehenden Ansprüche, **gekennzeichnet durch** eine Steuereinheit (48), welche im Zusammenwirken mit der berührungsempfindlichen Eingabeeinheit (36) zur Verarbeitung von Streckeninformationen (100) durch einen Bediener vorgesehen ist.

5. Entfernungsmessgerät nach Anspruch 4, **dadurch gekennzeichnet, dass** die Steuereinheit (48) zur Herstellung einer Tabelle (102) zum Zuordnen der Streckeninformationen (100) durch den Bediener mittels der Eingabeeinheit (36) vorgesehen ist.

6. Entfernungsmessgerät nach einem der vorhergehenden Ansprüche, **gekennzeichnet durch** eine Anzeigeeinheit (34) und eine Steuereinheit (48), die im Zusammenwirken mit der berührungsempfindlichen Eingabeeinheit (36) dazu vorgesehen ist, einem Anzeigefeld (104) zur Anzeige einer Streckeninformation (100) einer Strecke, eine Steuerfunktion zum Steuern einer Messung der Strecke zuzuordnen.

7. Entfernungsmessgerät nach Anspruch 1, **dadurch gekennzeichnet, dass** die Steuereinheit (48) dazu vorgesehen ist, die Zeichnung (54) anhand eines Skizzierens durch einen Bediener mittels der berührungsempfindlichen Eingabeeinheit (36) herzustellen.

8. Entfernungsmessgerät nach einem der vorhergehenden Ansprüche, **gekennzeichnet durch** einen Bedienstift (40) zum Bedienen der Eingabeeinheit (36).

9. Entfernungsmessgerät nach einem der vorhergehenden Ansprüche, **gekennzeichnet durch** ein Bedienelement (116), das zu einem Bedienen in Zusammenwirkung mit der berührungsempfindlichen Eingabeeinheit (36) vorgesehen ist.

## Claims

1. Distance measuring equipment having a housing (12) that forms an operator side (14) and a signal side (16) adjoining the operator side (14), wherein the signal side (16) has optical components (18) by means of which an optical measurement signal (20), in particular a laser signal, can be sent and received, wherein the measurement signal (20) can be used to ascertain a distance of the distance measuring equipment (12) from an object (22) to be surveyed, the operator side (14) has a user interface (32) provided for communication with an operator, wherein the user interface (32) has at least one touch-sensitive input unit (36), wherein the touch-sensitive input unit (36) has a contact area (38) formed by a display unit (34) for displaying distance information of the distance measuring equipment (12) in relation to an object (22) to be surveyed, **characterized by** a control unit (48) and a drawing mode of the control unit (48), provided for creating a drawing (54, 66, 78, 82, 98, 112) by means of the touch-sensitive input unit (36), wherein in advance of a survey the operator can use the input unit (36) to produce a drawing (54) in the form of a hand-drawn sketch of the space to be surveyed, wherein the control unit (48) is further intended to take captured measurement results (80) as a basis for matching the drawing (54) produced in advance of the survey to the measurement results (80), as a result of which a scale reproduction of the surveyed space is creatable by the control unit (48).

2. Distance measuring equipment according to Claim 1, **characterized in that** the contact area (38) extends over at least 40%, advantageously at least 50% and particularly preferably at least 70% of the operator side (14).

3. Distance measuring equipment according to Claim 1 or 2, **characterized in that** the contact area (38) extends over at least a substantial portion of the operator side (14).

4. Distance measuring equipment according to one of the preceding claims, **characterized by** a control unit (48) that, in combination with the touch-sensitive input unit (36), is provided for the processing of distance information (100) by an operator.

5. Distance measuring equipment according to Claim 4, **characterized in that** the control unit (48) is provided for producing a table (102) for association of the distance information (100) by the operator by means of the input unit (36).

6. Distance measuring equipment according to one of the preceding claims, **characterized by** a display unit (34) and a control unit (48) that, in combination with the touch-sensitive input unit (36), is provided to associate a control function for controlling a measurement of a distance with a display panel (104) for displaying distance information (100) for the distance.

7. Distance measuring equipment according to Claim 1, **characterized in that** the control unit (48) is provided to produce the drawing (54) on the basis of sketching by an operator by means of the touch-sensitive input unit (36).

8. Distance measuring equipment according to one of the preceding claims, **characterized by** an operator stylus (40) for operating the input unit (36).

9. Distance measuring equipment according to one of the preceding claims, **characterized by** an operator element (116) provided for operating in combination with the touch-sensitive input unit (36).

## Revendications

1. Appareil de télémétrie comprenant un boîtier (12), lequel forme un côté de conduite (14) et un côté de signal (16) adjacent au côté de conduite (14), le côté de signal (16) possédant des composants optiques (18) par le biais desquels peut être émis ou reçu un signal de mesure optique (20), notamment un signal laser, une distance entre l'appareil de télémétrie (12) et un objet (22) à mesurer pouvant être déterminée au moyen du signal de mesure (20), le côté de conduite (14) possédant une interface de conduite (32) qui est conçue pour la communication avec un opérateur, l'interface de conduite (32) possédant au moins une unité de saisie (36) tactile, l'unité de saisie (36) tactile possédant une zone de toucher (38) qui est formée par une unité d'affichage (34) destinée à afficher une information de distance entre l'appareil de télémétrie (12) et un objet (22) à mesurer, **caractérisé par** une unité de commande (48) et un mode de dessin de l'unité de commande (48), lequel est conçu pour l'élaboration d'un dessin (54, 66, 78, 82, 98, 112) au moyen de l'unité de saisie (36) tactile, un dessin (54) sous la forme d'un croquis à main levée du local à mesurer pouvant être créé par l'opérateur en phase préliminaire d'une mesure, l'unité de commande (48) étant en outre conçue pour adapter aux résultats de mesure (80), à l'aide des résultats de mesure (80) acquis, le dessin (54) créé en phase préliminaire de la mesure, moyennant quoi une représentation à l'échelle du local mesuré peut être élaborée par l'unité de commande (48).

2. Appareil de télémétrie selon la revendication 1, **caractérisé en ce que** la zone de toucher (38) s'étend sur au moins 40 %, de préférence au moins 50 % et notamment de préférence au moins 70 % du côté de conduite (14).

3. Appareil de télémétrie selon la revendication 1 ou 2, **caractérisé en ce que** la zone de toucher (38) s'étend sur au moins une partie essentielle du côté de conduite (14).

4. Appareil de télémétrie selon l'une des revendications précédentes, **caractérisé par** une unité de commande (48) qui, en coopération avec l'unité de saisie (36) tactile, est conçue pour le traitement d'informations de segment (100) par un opérateur.

5. Appareil de télémétrie selon la revendication 4, **caractérisé en ce que** l'unité de commande (48) est conçue pour la création d'un tableau (102) servant l'association des informations de segment (100) par l'opérateur au moyen de l'unité de saisie (36).

6. Appareil de télémétrie selon l'une des revendications précédentes, **caractérisé par** une unité d'affichage (34) et une unité de commande (48) qui, en coopération avec l'unité de saisie (36) tactile, sont conçues pour associer une fonction de commande destinée à commander une mesure d'un segment à un champ d'affichage (104) servant à afficher une information de segment (100) du segment.

7. Appareil de télémétrie selon la revendication 1, **caractérisé en ce que** l'unité de commande (48) est conçue créer le dessin (54) à l'aide d'une esquisse par un opérateur au moyen de l'unité de saisie (36) tactile.

8. Appareil de télémétrie selon l'une des revendications précédentes, **caractérisé par** un stylet (40) servant à la conduite de l'unité de saisie (36).

9. Appareil de télémétrie selon l'une des revendications précédentes, **caractérisé par** un élément de conduite (116) qui est conçu pour une conduite en coopération avec l'unité de saisie (36) tactile.
